(19) Europäisches Patentamt
European Patent Office
Office européen des brevets

(11) **EP 3 410 062 A1**

(12) **EUROPEAN PATENT APPLICATION**
published in accordance with Art. 153(4) EPC

(43) Date of publication:
**05.12.2018 Bulletin 2018/49**

(51) Int Cl.:
***G01C 1/04*** *(2006.01)*

(21) Application number: **17863668.4**

(22) Date of filing: **08.02.2017**

(86) International application number:
**PCT/CN2017/073119**

(87) International publication number:
**WO 2018/076572 (03.05.2018 Gazette 2018/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.10.2016 CN 201610971880**

(71) Applicant: **Ninebot Beijing Tech. Co., Ltd
Beijing 100192 (CN)**

(72) Inventors:
• **TANG, Chu
  Beijing 100192 (CN)**
• **SUN, Xiaolu
  Beijing 100192 (CN)**
• **CHEN, Zichong
  Beijing 100192 (CN)**
• **QING, Ming
  Beijing 100192 (CN)**
• **WU, Qing
  Beijing 100192 (CN)**
• **REN, Guanjiao
  Beijing 100192 (CN)**
• **PU, Li
  Beijing 100192 (CN)**

(74) Representative: **Regimbeau
20, rue de Chazelles
75847 Paris Cedex 17 (FR)**

(54) **TARGET TRACKING METHOD, TARGET TRACKING APPARATUS, AND STORAGE MEDIUM**

(57) Disclosed is a target tracking method, applicable to an electronic device, the electronic device being provided with a camera and an ultra wideband module, the method comprising: determining, by the ultra wideband module, first relative position information of a tracked target with respect to the electronic device; determining, by the camera, second relative position information of the tracked target with respect to the electronic device; determining third relative position information of the tracked target with respect to the electronic device on the basis of the first relative position information and the second relative position information; and controlling, on the basis of the third relative position information, the electronic device to track the movement of the target. The present invention realizes the technical effect of improving stability and robustness of a target tracking method. Also disclosed are a target tracking apparatus and a storage medium.

first relative location information of a target to be tracked with respect to electronic equipment is determined using a carrier-free communication module — S101

second relative location information of the target with respect to the electronic equipment is determined using a camera — S102

third relative location information of the target with respect to the electronic equipment is determined according to the first relative location information and the second relative location information — S103

tracking of advance of the target by the electronic equipment is controlled according to the third relative location information — S104

**FIG. 1**

Description

TECHNICAL FIELD

The present disclosure relates to the field of electronics, and in particular to a method and device for tracking a target, and a computer-readable storage medium.

BACKGROUND

Robots have been applying widely to various fields. For example, a ground robot (such as a balanced car) may be used as a mobility scooter for going out, security patrol, etc. An aerial robot (such as an Unmanned Aerial Vehicle, UAV, also known as a drone) may be used for supply transportation, disaster relief, topographical survey, power inspection, filming, etc.

A robot may track a target. In tracking the target, the robot may collect data of an image of the target, mostly with a camera. The robot may determine a location of the target with respect to the robot via visual tracking. The robot may then track advance of the target according to the location. However, such a method is unstable, and is prone to impact of a change in illumination, with poor robustness.

SUMMARY

Embodiments herein provide a method and device for tracking a target, and a computer-readable storage medium, capable of tracking a target more stably, with improved robustness.

According to a first aspect herein, a method for tracking a target applies to electronic equipment. The electronic equipment is provided with a camera and a carrier-free communication module. The includes:

determining, using the carrier-free communication module, first relative location information of a target to be tracked with respect to the electronic equipment;

determining, using the camera, second relative location information of the target with respect to the electronic equipment;

determining third relative location information of the target with respect to the electronic equipment according to the first relative location information and the second relative location information; and

controlling, according to the third relative location information, tracking of advance of the target by the electronic equipment.

The first relative location information may include at least one of a first distance between the electronic equipment and the target or a first angle formed with the target by a direction in which the electronic equipment is advancing.

The second relative location information may include at least one of a second distance between the electronic equipment and the target or a second angle formed with the target by the direction in which the electronic equipment is advancing.

The third relative location information may include at least one of a third distance between the electronic equipment and the target or a third angle formed with the target by the direction in which the electronic equipment is advancing.

The determining, using the carrier-free communication module, first relative location information of a target to be tracked with respect to the electronic equipment may include:

determining the first relative location information by sensing a location of a beacon using the carrier-free communication module. The beacon may be provided on the target.

The determining, using the camera, second relative location information of the target with respect to the electronic equipment may include:

acquiring image data collected by the camera;
determining, in the image data, a target template corresponding to the target; and
determining the second relative location information by performing visual tracking using the target template.

The determining, in the image data, a target template corresponding to the target may include:

determining a size of the target template in a subsequent-frame image according to $P_t = P_0 * \frac{d_t}{d_0}$.

The $P_t$ may be the size of the target template in the subsequent-frame image. The $P_0$ may be the size of the target template in an initial-frame image. The $d_0$ may be a first distance determined at an initial instant corresponding to the initial-frame image. The $d_t$ may be the first distance determined at a subsequent instant corresponding to the subsequent-frame image. Both the subsequent-frame image and the initial-frame image may be part of the image data. The subsequent-frame image may come later in time than the initial-frame image.

The determining third relative location information of the target with respect to the electronic equipment according to the first relative location information and the second relative location information may include:

determining the third distance between the electronic equipment and the target according to $d = d_{uwb} \cdot \cos\theta_v$, wherein the d may be the third distance, the $d_{uwb}$ may be the first distance, and the $\theta_v$ may be an angle of pitch of the camera; and

determining the third angle formed with the target by the direction in which the electronic equipment is advancing according to $\theta = \sigma \cdot \theta_{vision} + (1 - \sigma) \cdot \theta_{uwb}$, wherein the $\theta$ may be the third angle, the $\theta_{uwb}$ may be the first angle, the $\theta_{vision}$ may be the second angle, and the $\sigma$ may be a constant between 0 and 1 that determines weights of the $\theta_{vision}$ and the $\theta_{uwb}$.

The controlling, according to the third relative location information, tracking of advance of the target by the electronic equipment may include at least one of:

advancing the electronic equipment toward the target by adjusting, according to the third angle, the direction in which the electronic equipment is advancing;

directing the camera at the target by adjusting, according to the third angle, an angle of pitch of the camera; or adjusting, according to the third distance, a speed at which the electronic equipment is advancing.

On the other hand, the following technical solution according to an embodiment herein is provided.

According to a second aspect herein, a device for tracking a target applies to electronic equipment. The electronic equipment may be provided with a camera and a carrier-free communication module. The device for tracking a target includes at least one of a first determining unit, a second determining unit, a third determining unit, or a controlling unit.

The first determining unit is arranged for: determining, using the carrier-free communication module, first relative location information of a target to be tracked with respect to the electronic equipment.

The second determining unit is arranged for: determining, using the camera, second relative location information of the target with respect to the electronic equipment.

The third determining unit is arranged for: determining third relative location information of the target with respect to the electronic equipment according to the first relative location information and the second relative location information.

The controlling unit is arranged for: controlling, according to the third relative location information, tracking of advance of the target by the electronic equipment.

The first relative location information may include at least one of a first distance between the electronic equipment and the target or a first angle formed with the target by a direction in which the electronic equipment is advancing.

The second relative location information may include at least one of a second distance between the electronic equipment and the target or a second angle formed with the target by the direction in which the electronic equipment is advancing.

The third relative location information may include at least one of a third distance between the electronic equipment and the target or a third angle formed with the target by the direction in which the electronic equipment is advancing.

The first determining unit may include a first determining subunit.

The first determining subunit may be arranged for: determining the first relative location information by sensing a location of a beacon using the carrier-free communication module. The beacon may be provided on the target.

The second determining unit may include at least one of an acquiring subunit, a second determining subunit, or a third determining subunit.

The acquiring subunit may be arranged for: acquiring image data collected by the camera.

The second determining subunit may be arranged for: determining, in the image data, a target template corresponding to the target.

The third determining subunit may be arranged for: determining the second relative location information by performing visual tracking using the target template.

The second determining subunit may be arranged for: determining a size of the target template in a subsequent-frame image according to $P_t = P_0 * \dfrac{d_t}{d_0}$.

The $P_t$ may be the size of the target template in the subsequent-frame image. The $P_0$ may be the size of the target template in an initial-frame image. The $d_0$ may be a first distance determined at an initial instant corresponding to the initial-frame image. The $d_t$ may be the first distance determined at a subsequent instant corresponding to the subsequent-frame image. The subsequent-frame image and the initial-frame image may be part of the image data. The subsequent-frame image may come later in time than the initial-frame image.

The third determining unit may include at least a fourth determining subunit or a fifth determining subunit.

The fourth determining subunit may be arranged for: determining the third distance between the electronic equipment and the target according to $d = d_{uwb} \cdot \cos \theta_v$. The d may be the third distance. The $d_{uwb}$ may be the first distance. The $\theta_v$ may be an angle of pitch of the camera.

The fifth determining subunit may be arranged for: determining the third angle formed with the target by the direction in which the electronic equipment is advancing according to $\theta = \sigma \cdot \theta_{vision} + (1 - \sigma) \cdot \theta_{uwb}$. The $\theta$ may be the third angle. The $\theta_{uwb}$ may be the first angle, the $\theta_{vision}$ may be the second angle. The $\sigma$ may be a constant between 0 and 1 that determines weights of the $\theta_{vision}$ and the $\theta_{uwb}$.

The controlling unit may include at least one of a first adjusting subunit, a second adjusting subunit, or a third adjusting subunit.

The first adjusting subunit may be arranged for: advancing the electronic equipment toward the target by adjusting, according to the third angle, the direction in which the electronic equipment is advancing.

The second adjusting subunit may be arranged for: directing the camera at the target by adjusting, according to the third angle, an angle of pitch of the camera.

The third adjusting subunit may be arranged for: adjusting, according to the third distance, a speed at which the electronic equipment is advancing.

One or more technical solutions provided in embodiments herein have technical effects or advantages at least as follows.

According to a third aspect herein, a device for tracking a target applies to electronic equipment. The device includes a processor and memory. The memory has stored thereon instructions executable by the processor. When executed by the processor, the instructions cause the processor to perform a method for tracking a target according to an embodiment herein.

According to a fourth aspect herein, a non-transitory computer-readable storage medium has stored thereon executable instructions that, when executed by a processor, cause the processor to perform a method for tracking a target according to an embodiment herein.

With embodiments herein, as the electronic equipment is provided with both the carrier-free communication module and the camera, more accurate third relative location information is acquired by merging the first relative location information determined by the carrier-free communication module and the second relative location information determined by the camera. Tracking of advance of the target by the electronic equipment is then controlled using the third relative location information, such that a target may be tracked more stably, with improved robustness.

## BRIEF DESCRIPTION OF THE DRAWINGS

Drawings herein are introduced briefly for clearer illustration of a technical solution herein. Note that the drawings described below refer merely to some embodiments herein. For those skilled in the art, other drawings may be acquired according to the drawings herein without creative effort.

FIG. 1 is a flowchart of a method according to an embodiment herein.
FIG. 2 - FIG. 3 are diagrams of applying a method for tracking a target to a balanced car according to embodiments herein, with FIG. 2 being a side view and FIG. 3 being a top view.
FIG. 4 is a diagram of applying a method for tracking a target to a UAV according to an embodiment herein.
FIG. 5 is a diagram of a structure of a device according to an embodiment herein.

## DETAILED DESCRIPTION

Embodiments herein provide a method and device for tracking a target, capable of tracking a target more stably, with improved robustness.

In view of the aforementioned technical problem(s), a technical solution according to embodiments herein provides a method for tracking a target. The method applies to electronic equipment. The electronic equipment is provided with a camera and a carrier-free communication module. The method includes operations as follows. First relative location information of a target to be tracked, with respect to the electronic equipment, is determined using the carrier-free communication module. Second relative location information of the target with respect to the electronic equipment is determined using the camera. Third relative location information of the target with respect to the electronic equipment is determined according to the first relative location information and the second relative location information. Tracking of advance of the target by the electronic equipment is controlled according to the third relative location information.

The technical solution is elaborated below with reference to the drawings and embodiments herein, to allow a better understanding of the technical solution.

Note that a term "and /or" herein is but an association describing associated objects, which indicates three possible relationships. For example, by A and /or B, it means that there may be three cases, namely, existence of but A, existence of both A and B, or existence of but B. In addition, a slash mark "/" herein generally denotes an "or" relationship between two associated objects that come respectively before and after the mark per se.

According to an embodiment herein, a method for tracking a target applies to electronic equipment. The electronic equipment may be equipment such as a ground robot (such as a balanced car), an Unmanned Aerial Vehicle (UAV, such as a multi-rotor UAV, a fixed-wing UAV, etc.), an electrical car, etc. The electronic equipment is not limited by an embodiment herein to any specific type of equipment.

The electronic equipment may be provided with a camera and a carrier-free communication module. The carrier-free communication module may be an Ultra Wideband (UWB) communication module. Unlike conventional communication, UWB communication requires no carrier to transmit a signal. Instead, data are delivered by sending and receiving ultra-narrow pulses of nanoseconds, sub-seconds, or below. UWB communication is featured by exceptional tampering-resistance, carrier-free, low equipment transmit power, etc. UWB communication may be used for precise locating, with a precision of up to around 10 centimeters (cm) in distance. Naturally, the carrier-free communication module according to an embodiment herein is not limited to a UWB communication module. Any carrier-free communication module capable of tracking a target in an actual application shall fall in the scope of embodiments herein.

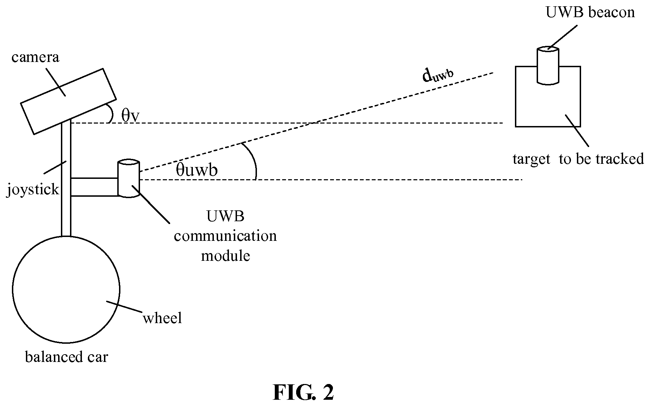

As shown in FIG. 2, the electronic equipment may be a balanced car, for example. A camera and a UWB communication module may be installed on a joystick of the balanced car.

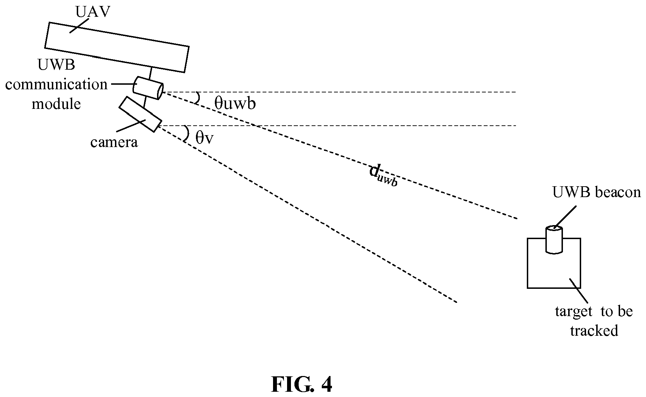

As shown in FIG. 4, the electronic equipment may be a UAV, for example. A camera and a UWB communication module may be installed at the bottom of the UAV. The UWB communication module may be a high-power UWB communication module with a large detection distance, applicable to a UAV for high-altitude flight.

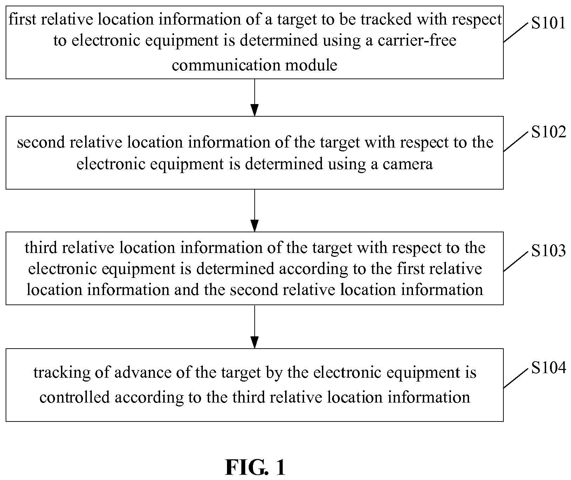

As shown in FIG. 1, a method for tracking a target according to an embodiment herein includes operations or steps as follows.

In S101, first relative location information of a target to be tracked with respect to electronic equipment is determined using a carrier-free communication module.

The S101 may be implemented as follows.

The first relative location information may be determined by sensing a location of a beacon using the carrier-free communication module. The beacon may be provided on the target.

The first relative location information may include at least one of a first distance between the electronic equipment and the target or a first angle formed with the target by a direction in which the electronic equipment is advancing.

The target may carry a UWB beacon. The UWB beacon may be provided with a receiving antenna. The UWB communication module may be provided with a transmitting antenna. The location of the UWB beacon may be sensed using the carrier-free communication module. Then, the first distance between the electronic equipment and the target or the first angle formed with the target by the direction in which the electronic equipment is advancing may be determined. However, when an orientation of polarization of the receiving antenna of the UWB beacon becomes inconsistent with an orientation of polarization of the transmitting antenna in the UWB communication module (such as when orientation of the UWB beacon changes), the precision of the first angle acquired may drop dramatically. A direction of tracking may tend to sway.

In S102, second relative location information of the target with respect to the electronic equipment is determined using a camera.

The S102 may be implemented as follows.

Image data collected by the camera may be acquired. A target template corresponding to the target may be determined in the image data. The second relative location information may be determined by performing visual tracking using the target template.

The second relative location information may include at least one of a second distance between the electronic equipment and the target or a second angle formed with the target by the direction in which the electronic equipment is advancing.

The electronic equipment may be provided with one or more cameras (such as two or more cameras). Image data containing the target may be collected using the camera(s). The target template corresponding to the target in a frame image (namely an initial-frame image) in the image data may be determined. At least one of the second distance between the electronic equipment and the target or the second angle formed with the target by the direction in which the electronic equipment is advancing may be computed using a visual tracking algorithm. The visual tracking algorithm may be any short-term tracking algorithm.

In determining the target template corresponding to the target, the initial-frame image collected by the camera(s) may be displayed using a display. A user selection may be acquired. The target template may be determined from the initial-frame image based on the user selection. Alternatively, the target template may be determined using saliency detection, object detection, etc.

The target in a subsequent-frame image may be tracked based on visual tracking by training a model according to the target template corresponding to the target defined in the initial-frame image and updating the model constantly during the tracking process, to adapt to a change in the orientation of the target (object) and overcome complex background tampering or interference. As no offline training is required, such a solution is highly universal and may be used for tracking any object specified by a user. The second angle computed based on visual tracking is highly accurate. However, scenarios of actual application are often highly complex, such as due to change in illumination, interference by a similar target, etc. Therefore, the visual tracking may not be robust. The second distance computed may be prone to impact and may not meet a product-level application. In addition, it may not be possible to determine accurately whether the target is lost.

The target template corresponding to the target may be determined in the image data as follows.

A size of the target template in a subsequent-frame image may be determined according to

$$P_t = P_0 * \frac{d_t}{d_0} \qquad (1).$$

The $P_t$ may be the size of the target template in the subsequent-frame image. The $P_0$ may be the size of the target template in an initial-frame image. The $d_0$ may be a first distance determined at an initial instant corresponding to the initial-frame image. The $d_t$ may be the first distance determined at a subsequent instant corresponding to the subsequent-frame image. Both the subsequent-frame image and the initial-frame image may be part of the image data. The subsequent-frame image may come later in time than the initial-frame image.

For example, having determined the target template corresponding to the target from the initial-frame image at an instant $t_0$ (namely, the initial instant), the size of the target template $P_0$ may be recorded. The first distance $d_0$ between the electronic equipment and the target determined at the instant to using the UWB communication module may be recorded as well. At an instant $t_1$ (namely, the subsequent instant) after the instant $t_0$, in determining the second relative location information of the target with respect to the electronic equipment from the subsequent-frame image (namely, any frame after the initial-frame) using the visual tracking, the first distance $d_t$ between the electronic equipment and the target determined using the UWB communication module may be acquired. The size $P_t$ of the target template corresponding to the target in the subsequent-frame image may be determined according to

$$P_t = P_0 * \frac{d_t}{d_0} \qquad (1).$$

In determining the second relative location information using the visual tracking, the size of the target template and a location of the target template in an image may have to be considered. The size of the target template may reflect a distance between the target to be tracked and the electronic equipment. The larger the target template, the less the distance is. The smaller the target template, the greater the distance is. Inaccuracy in the size of the target template may impact the accuracy of the second relative location information. As the first distance measured by the UWB communication module is highly accurate, the size of the target template may be corrected using the first distance measured by the UWB communication module. The second relative location information may be determined using visual tracking according to the corrected size $P_t$ of the target template, which may greatly improve the accuracy of the second relative location information, thereby improving the precision of the visual tracking.

In S103, third relative location information of the target with respect to the electronic equipment is determined according to the first relative location information and the second relative location information.

Both the solution of acquiring the first relative location information by UWB communication and the solution of acquiring the second relative location information by visual tracking have their pros and cons. Generally speaking, the first distance acquired by the UWB communication module is more accurate than the second distance acquired by the visual tracking, while the second angle acquired by the visual tracking is more accurate than the first angle acquired by the UWB communication module. Therefore, the first relative location information and the second relative location information may be merged (with no limitation set herein to a specific mode of merging), to acquire the third relative location information with higher accuracy.

The third relative location information may include at least one of a third distance between the electronic equipment and the target or a third angle formed with the target by the direction in which the electronic equipment is advancing.

A target will not be lost when the target is tracked using the UWB communication module. Therefore, it may help determining whether a target is lost during visual tracking using the first relative location information determined by the UWB communication module. Therefore, it is now possible to determine accurately whether the target is lost in visual tracking.

In some adverse circumstances, the accuracy of the first relative location information or the second relative location information may drop dramatically, which may seriously impact the accuracy of the third relative location information. In view of this, a confidence level may be set respectively for the first relative location information and the second relative location information to indicate respective degrees of credibility of the first relative location information and of the second relative location information. If the first relative location information and the second relative location information are highly consistent, the third relative location information may be acquired by directly merging the first relative location information and the second relative location information considering no confidence level. If the first relative location information differs a lot from the second relative location information, then information with a higher confidence level may play a decisive role. Alternatively, information with a much too low confidence level may be ruled out directly.

The process of determining the first relative location information by sensing the location of the beacon using the carrier-free communication module may subject to interference by another wireless signal in the environment, such that the determined first relative location information may not be accurate enough, with a low degree of credibility. Therefore, a confidence level may be set for the first relative location information acquired at each instant to indicate a degree of credibility of the first relative location information acquired at each instant. When the first relative location information is determined at the instant to, a waveform signal at an instant when the UWB communication module senses the UWB beacon (original waveform signal for short) may be saved for subsequent use. At the instant $t_i$ after the instant $t_0$, when the location of the UWB beacon is sensed using the communication module, a waveform signal sensed by the UWB communication module at the instant $t_i$ (ith waveform signal for short) may be compared with the original waveform signal to compute a similarity between the ith waveform signal and the original waveform signal. The similarity may be set as the confidence level of the first relative location information acquired at the instant $t_i$. The greater the similarity, the more credible the first location acquired at the instant $t_i$ is, that is, the higher the confidence level is. The less the similarity, the less credible the first location acquired at $t_i$ is, that is, the lower the confidence level is.

The target may be lost when the second relative location information is determined by visual tracking. In this case, a target in the target template may not be the original target to be tracked, such that the determined second relative location information may be inaccurate and of a low degree of credibility. Therefore, a confidence level may be set for the second relative location information acquired for each frame image to indicate a degree of credibility of the second relative location information acquired for each frame image. An image in the target template in the initial-frame image (original image for short) may be saved for subsequent use. When the second relative location information is determined for a subsequent-frame image, an image in the target template in the subsequent-frame image (subsequent image for short) may be acquired. The subsequent image may be compared with the original image to compute a similarity between the subsequent image and the original image. The similarity may be set as the confidence level of the second relative location information determined based on the subsequent-frame image. The greater the similarity, the more credible the second relative location information determined based on the subsequent-frame image is, that is, the higher the confidence level is. The less the similarity, the less credible the second relative location information determined based on the subsequent-frame image is, that is, the lower the confidence level is.

The S103 may be illustrated below, with the electronic equipment being a balanced car, for example.

As shown in FIG. 2, in comparing the first distance and the second distance, it may be found that the second distance differs a lot from the first distance and that the first distance has a higher confidence level. Then only the first distance may be considered in determining the third distance between the balanced car and the target. For example, the third distance may be determined according to

$$P_t = P_0 d = d_{uwb} \cdot \cos \theta_v * \frac{d_t}{d_0} \qquad (2).$$

The d may be the third distance. The $d_{uwb}$ may be the first distance. The camera may be rotated up and down. The $\theta_v$ may be an angle of pitch of the camera. An angle of elevation of the camera may be used as an approximation of the first angle $\theta_{uwb}$. Alternatively, the first angle $\theta_{uwb}$ may be computed according to signal transmission between the UWB communication module (mounted on the balanced car) and the UWB beacon (mounted on the target).

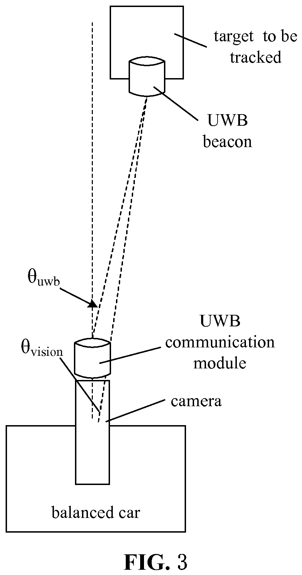

As shown in FIG. 3, in determining the third angle formed with the target by the direction in which the balanced car is advancing, performance of the UWB communication module may be taken into account, and weights of the first angle and the second angle may be adjusted according to the performance of the UWB communication module. For example, the third angle formed with the target by the direction in which the balanced car is advancing may be determined according to

$$\theta = \sigma \cdot \theta_{vision} + (1 - \sigma) \cdot \theta_{uwb} \qquad\qquad (3).$$

The θ may be the third angle. The $\theta_{uwb}$ may be the first angle. The $\theta_{vision}$ may be the second angle. The σ may be a constant between 0 and 1 that determines weights of the $\theta_{vision}$ and the $\theta_{uwb}$. The σ may relate to the performance of the UWB communication module. The better the performance of the UWB communication module, the more accurate the $\theta_{uwb}$ measured by the UWB communication module is, and the larger the weight of the $\theta_{uwb}$ is. The worse the performance of the UWB communication module, the less accurate the $\theta_{uwb}$ measured by the UWB communication module is, and the smaller the weight of the $\theta_{uwb}$ is.

The S103 may be illustrated below, with the electronic equipment being a UAV, for example.

As shown in FIG. 4, in determining a horizontal distance between the target and the UAV (namely, the third distance), the second angle determined by visual tracking may have a major error, resulting in a much too low confidence level to be considered. For example, the horizontal distance between the target and the UAV (namely, the third distance) may be computed according to

$$d = d_{uwb} \cdot cos\ \theta_{uwb} \qquad\qquad (4).$$

The d may be the third distance. The $d_{uwb}$ may be the first distance. The $\theta_{uwb}$ may be the first angle. As the UWB communication module is secured to the UAV, an angle of orientation of the UAV may be used as an approximation of the first angle $\theta_{uwb}$. Alternatively, the first angle $\theta_{uwb}$ may be computed according to signal transmission between the UWB communication module (mounted on the UAV) and the UWB beacon (mounted on the target).

In determining an angle of pitch (namely, the third angle) formed with the target by the direction in which the UAV is advancing, performance of the UWB communication module may be taken into account, and weights of the first angle and the second angle may be adjusted according to the performance of the UWB communication module. For example, the angle of pitch (namely, the third angle) formed with the target by the direction in which the UAV is advancing may be determined according to

$$\theta = \sigma \cdot \theta_{vision} + (1 - \sigma) \cdot \theta_{uwb} \qquad\qquad (3).$$

The θ may be the third angle. The $\theta_{uwb}$ may be the first angle, which may be approximated with the angle of orientation of the UAV. The $\theta_{vision}$ may be the second angle. The σ may be a constant between 0 and 1 that determines weights of the $\theta_{vision}$ and the $\theta_{uwb}$. The σ may relate to the performance of the UWB communication module. The better the performance of the UWB communication module, the larger the weight of the $\theta_{uwb}$ is. The worse the performance of the UWB communication module, the smaller the weight of the $\theta_{uwb}$ is.

In S104, tracking of advance of the target by the electronic equipment is controlled according to the third relative location information.

The S104 may be implemented as follows. The electronic equipment may be made to advance toward the target by adjusting, according to the third angle, the direction in which the electronic equipment is advancing. The camera may be directed at the target by adjusting, according to the third angle, an angle of pitch of the camera.

For example, when the electronic equipment is a balanced car, the balanced car may be made to advance toward the target by adjusting, according to the third angle, the direction in which the balanced car is advancing. The camera on the balanced car may be directed at the target by adjusting, according to the third angle, the angle of pitch of the camera, ensuring that the target is always located at the center of an image taken by the camera.

For example, when the electronic equipment is a UAV, the UAV may be made to fly toward the target by adjusting, according to the third angle, a direction in which the UAV is flying. The direction in which the UAV is flying may be adjusted by adjusting an angle of pitch, an angle of yaw, and an angle of roll of the UAV. The camera on the UAV may be directed at the target by adjusting, according to the third angle, the angle of pitch of the camera, ensuring that the target is always located at the center of an image taken by the camera.

The S104 may be further implemented as follows. A speed at which the electronic equipment is advancing may be adjusted according to the third distance.

For example, when the electronic equipment is a balanced car, a speed at which the balanced car is driven may be adjusted according to the third distance. The speed at which the balanced car is driven may be proportional to the third distance. The greater the third distance, the greater the speed at which the balanced car is driven is, such that the distance between the balanced car and the target may be reduced to prevent the target from being lost. The less the third distance, the less the speed at which the balanced car is driven is, so as to prevent the balanced car from colliding with the target.

For example, when the electronic equipment is a UAV, a speed at which the UAV is flying may be adjusted according to the third distance. The speed at which the UAV is flying may be proportional to the third distance. The greater the third distance, the greater the speed at which the UAV is flying is, such that the distance between the UAV and the target may be reduced to prevent the target from being lost. The less the third distance, the less the speed at which the UAV is flying is, so as to prevent the UAV from colliding with the target.

In addition, a speed at which the electronic equipment is driven may be adjusted according to the size of the target template corresponding to the target. The target template determined in the initial-frame image may have a different size in the subsequent-frame image. Generally, the less the distance between the electronic equipment and the target, the greater the size of the target template is. It may be defined that the speed at which the electronic equipment is advancing or flying is inversely proportional to the size of the target template. A speed reducing model may be formulated using a sigmoid function. Thus, the electronic equipment may slow down rapidly as the electronic equipment approaches a target object, avoiding a collision.

The technical solution herein has technical effects or advantages at least as follows.

A method for tracking a target is disclosed in embodiments herein. The method applies to electronic equipment. The electronic equipment is provided with a camera and a carrier-free communication module. The method is implemented as follows. First relative location information of a target to be tracked, with respect to the electronic equipment, is determined using the carrier-free communication module. Second relative location information of the target with respect to the electronic equipment is determined using the camera. Third relative location information of the target with respect to the electronic equipment is determined according to the first relative location information and the second relative location information. Tracking of advance of the target by the electronic equipment is controlled according to the third relative location information. As the electronic equipment is provided with both the carrier-free communication module and the camera, more accurate third relative location information is acquired by merging the first relative location information determined by the carrier-free communication module and the second relative location information determined by the camera. Tracking of advance of the target by the electronic equipment is then controlled using the third relative location information, such that a target may be tracked more stably, with improved robustness.

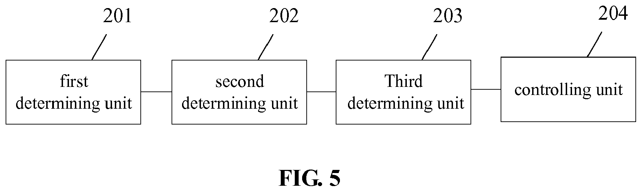

According to an embodiment herein, a device for tracking a target applies to electronic equipment. The electronic equipment may be provided with a camera and a carrier-free communication module. As shown in FIG. 5, the device for tracking a target includes at least one of a first determining unit, a second determining unit, a third determining unit, or a controlling unit.

The first determining unit 201 is arranged for: determining, using the carrier-free communication module, first relative location information of a target to be tracked with respect to the electronic equipment.

The second determining unit 202 is arranged for: determining, using the camera, second relative location information of the target with respect to the electronic equipment.

The third determining unit 203 is arranged for: determining third relative location information of the target with respect to the electronic equipment according to the first relative location information and the second relative location information.

The controlling unit 204 is arranged for: controlling, according to the third relative location information, tracking of advance of the target by the electronic equipment.

The first relative location information may include at least one of a first distance between the electronic equipment and the target or a first angle formed with the target by a direction in which the electronic equipment is advancing.

The second relative location information may include at least one of a second distance between the electronic equipment and the target or a second angle formed with the target by the direction in which the electronic equipment is advancing.

The third relative location information may include at least one of a third distance between the electronic equipment and the target or a third angle formed with the target by the direction in which the electronic equipment is advancing.

The first determining unit 201 may include a first determining subunit.

The first determining subunit may be arranged for: determining the first relative location information by sensing a location of a beacon using the carrier-free communication module. The beacon may be provided on the target.

The second determining unit 202 may include at least one of an acquiring subunit, a second determining subunit, or a third determining subunit.

The acquiring subunit may be arranged for: acquiring image data collected by the camera.

The second determining subunit may be arranged for: determining, in the image data, a target template corresponding to the target.

The third determining subunit may be arranged for: determining the second relative location information by performing visual tracking using the target template.

The second determining subunit may be arranged for: determining a size of the target template in a subsequent-frame image according to $P_t = P_0 * \dfrac{d_t}{d_0}$.

The $P_t$ may be the size of the target template in the subsequent-frame image. The $P_0$ may be the size of the target template in an initial-frame image. The $d_0$ may be a first distance determined at an initial instant corresponding to the initial-frame image. The $d_t$ may be the first distance determined at a subsequent instant corresponding to the subsequent-frame image. The subsequent-frame image and the initial-frame image may be part of the image data. The subsequent-frame image may come later in time than the initial-frame image.

The third determining unit 203 may include at least a fourth determining subunit or a fifth determining subunit.

The fourth determining subunit may be arranged for: determining the third distance between the electronic equipment and the target according to $d = d_{uwb} \cdot \cos \theta_v$. The d may be the third distance. The $d_{uwb}$ may be the first distance. The $\theta_v$ may be an angle of pitch of the camera.

The fifth determining subunit may be arranged for: determining the third angle formed with the target by the direction in which the electronic equipment is advancing according to $\theta = \sigma \cdot \theta_{vision} + (1 - \sigma) \cdot \theta_{uwb}$. The $\theta$ may be the third angle. The $\theta_{uwb}$ may be the first angle, the $\theta_{vision}$ may be the second angle. The $\sigma$ may be a constant between 0 and 1 that determines weights of the $\theta_{vision}$ and the $\theta_{uwb}$.

The controlling unit 204 may include at least one of a first adjusting subunit, a second adjusting subunit, or a third adjusting subunit.

The first adjusting subunit may be arranged for: advancing the electronic equipment toward the target by adjusting, according to the third angle, the direction in which the electronic equipment is advancing.

The second adjusting subunit may be arranged for: directing the camera at the target by adjusting, according to the third angle, an angle of pitch of the camera.

The third adjusting subunit may be arranged for: adjusting, according to the third distance, a speed at which the electronic equipment is advancing.

According to an embodiment herein, a device for tracking a target applies to electronic equipment. The device includes a processor and memory. The memory has stored thereon instructions executable by the processor. When executed by the processor, the instructions cause the processor to perform a method for tracking a target according to an embodiment herein.

According to an embodiment herein, a non-transitory computer-readable storage medium has stored thereon executable instructions that, when executed by a processor, cause the processor to perform a method for tracking a target according to an embodiment herein.

Exemplarily, the computer-readable storage medium may be provided as one of a flash memory, a magnetic disk memory, a CD-ROM, an optical memory, or a combination thereof.

Electronic equipment according to an embodiment herein is used for implementing a method for processing information according to an embodiment herein. Based on the method for processing information according to an embodiment herein, those skilled in the art may understand modes of implementing the electronic equipment according to an embodiment herein, as well as various variations thereof. Therefore, the modes in which the electronic equipment implements the method according to an embodiment herein are not elaborated. Any electronic equipment used by those skilled in the art for implementing the method for processing information according to an embodiment herein shall fall within the scope of the present disclosure.

The technical solution herein has technical effects or advantages at least as follows.

A device for tracking a target is disclosed in embodiments herein. The device applies to electronic equipment. The electronic equipment may be provided with a camera and a carrier-free communication module. The device for tracking a target includes a first determining unit, a second determining unit, a third determining unit, and a controlling unit. The first determining unit is arranged for: determining, using the carrier-free communication module, first relative location information of a target to be tracked with respect to the electronic equipment. The second determining unit is arranged for: determining, using the camera, second relative location information of the target with respect to the electronic equipment. The third determining unit is arranged for: determining third relative location information of the target with respect to the electronic equipment according to the first relative location information and the second relative location information. The controlling unit is arranged for: controlling, according to the third relative location information, tracking of advance of the target by the electronic equipment. As the electronic equipment is provided with both the carrier-free communication module and the camera, more accurate third relative location information is acquired by merging the first relative location information determined by the carrier-free communication module and the second relative location information determined by the camera. Tracking of advance of the target by the electronic equipment is then controlled using the third relative location information, such that a target may be tracked more stably, with improved robustness.

Those skilled in the art will know that an embodiment herein may provide a method, system, or computer program product. Therefore, an embodiment herein may take on a form of pure hardware, pure software, or a combination of hardware and software. In addition, an embodiment herein may take on a form of a computer program product implemented on one or more computer available storage media (including but not limited to, magnetic disk memory, CD-ROM, optic memory, etc.) containing computer available program codes.

The present disclosure is illustrated with reference to flowcharts and/or block diagrams of the method, device (system) and computer-program product according to embodiments herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a transitory or non-transitory computer-readable memory or storage medium capable of guiding a computer or another programmable data processing device to work in a given way, such that the instructions stored in the computer-readable memory or storage medium generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

While embodiments herein have been described, those skilled in the art may make variations and modifications on the embodiments once those skilled in the art learn the basic inventive concept herein. Thus, the accompanying claims are intended to cover the embodiments and all the variations and modifications that fall within the scope of the present disclosure.

Clearly, various modifications and variations can be devised by those skilled in the art without departing from the spirit and scope of the present disclosure, and the present disclosure is intended to cover such modifications and variations that fall within the scope of the accompanying claims and the equivalents thereof.

Industrial applicability

With embodiments herein, first relative location information of a target to be tracked, with respect to the electronic equipment, is determined using a carrier-free communication module. Second relative location information of the target with respect to the electronic equipment is determined using a camera. Third relative location information of the target with respect to the electronic equipment is determined according to the first relative location information and the second relative location information. Tracking of advance of the target by the electronic equipment is controlled according to the third relative location information, such that a target may be tracked more stably, with improved robustness.

**Claims**

1. A method for tracking a target, applying to electronic equipment provided with a camera and a carrier-free communication module, the method comprising:

   determining, using the carrier-free communication module, first relative location information of a target to be tracked with respect to the electronic equipment;
   determining, using the camera, second relative location information of the target with respect to the electronic equipment;
   determining third relative location information of the target with respect to the electronic equipment according to the first relative location information and the second relative location information; and
   controlling, according to the third relative location information, tracking of advance of the target by the electronic equipment.

2. The method according to claim 1,

   wherein the first relative location information comprises at least one of a first distance between the electronic equipment and the target or a first angle formed with the target by a direction in which the electronic equipment is advancing,

wherein the second relative location information comprises at least one of a second distance between the electronic equipment and the target or a second angle formed with the target by the direction in which the electronic equipment is advancing,

wherein the third relative location information comprises at least one of a third distance between the electronic equipment and the target or a third angle formed with the target by the direction in which the electronic equipment is advancing.

3. The method according to claim 1, wherein the determining, using the carrier-free communication module, first relative location information of a target to be tracked with respect to the electronic equipment comprises:

determining the first relative location information by sensing a location of a beacon using the carrier-free communication module, the beacon being provided on the target.

4. The method according to claim 1, wherein the determining, using the camera, second relative location information of the target with respect to the electronic equipment comprises:

acquiring image data collected by the camera;
determining, in the image data, a target template corresponding to the target; and
determining the second relative location information by performing visual tracking using the target template.

5. The method according to claim 4, wherein the determining, in the image data, a target template corresponding to the target comprises:

determining a size of the target template in a subsequent-frame image according to $P_t = P_0 * \dfrac{d_t}{d_0}$,

the $P_t$ being the size of the target template in the subsequent-frame image, the $P_0$ being the size of the target template in an initial-frame image, the $d_0$ being a first distance determined at an initial instant corresponding to the initial-frame image, the $d_t$ being the first distance determined at a subsequent instant corresponding to the subsequent-frame image, both the subsequent-frame image and the initial-frame image being part of the image data, and the subsequent-frame image coming later in time than the initial-frame image.

6. The method according to claim 2, wherein the determining third relative location information of the target with respect to the electronic equipment according to the first relative location information and the second relative location information comprises:

determining the third distance between the electronic equipment and the target according to $d = d_{uwb} \cdot \cos\theta_v$, the d being the third distance, the $d_{uwb}$ being the first distance, the $\theta_v$ being an angle of pitch of the camera; and determining the third angle formed with the target by the direction in which the electronic equipment is advancing according to $\theta = \sigma \cdot \theta_{vision} + (1 - \sigma) \cdot \theta_{uwb}$,
the $\theta$ being the third angle, the $\theta_{uwb}$ being the first angle, the $\theta_{vision}$ being the second angle, the $\sigma$ being a constant between 0 and 1 that determines weights of the $\theta_{vision}$ and the $\theta_{uwb}$.

7. The method according to claim 2, wherein the controlling, according to the third relative location information, tracking of advance of the target by the electronic equipment comprises at least one of:

advancing the electronic equipment toward the target by adjusting, according to the third angle, the direction in which the electronic equipment is advancing;
directing the camera at the target by adjusting, according to the third angle, an angle of pitch of the camera; or
adjusting, according to the third distance, a speed at which the electronic equipment is advancing.

8. A device for tracking a target, applying to electronic equipment provided with a camera and a carrier-free communication module, the device comprising:

a first determining unit arranged for: determining, using the carrier-free communication module, first relative location information of a target to be tracked with respect to the electronic equipment;
a second determining unit arranged for: determining, using the camera, second relative location information of the target with respect to the electronic equipment;
a third determining unit arranged for: determining third relative location information of the target with respect to the electronic equipment according to the first relative location information and the second relative location information; and
a controlling unit arranged for: controlling, according to the third relative location information, tracking of advance of the target by the electronic equipment.

9. The device according to claim 8,

    wherein the first relative location information comprises at least one of a first distance between the electronic equipment and the target or a first angle formed with the target by a direction in which the electronic equipment is advancing,
    wherein the second relative location information comprises at least one of a second distance between the electronic equipment and the target or a second angle formed with the target by the direction in which the electronic equipment is advancing,
    wherein the third relative location information comprises at least one of a third distance between the electronic equipment and the target or a third angle formed with the target by the direction in which the electronic equipment is advancing.

10. The device according to claim 8, wherein the first determining unit comprises a first determining subunit arranged for:

    determining the first relative location information by sensing a location of a beacon using the carrier-free communication module, the beacon being provided on the target.

11. The device according to claim 8, wherein the second determining unit comprises an acquiring subunit, a second determining subunit, and a third determining subunit,
    wherein the acquiring subunit is arranged for: acquiring image data collected by the camera,
    wherein the second determining subunit is arranged for: determining, in the image data, a target template corresponding to the target,
    wherein the third determining subunit is arranged for: determining the second relative location information by performing visual tracking using the target template.

12. The device according to claim 11, wherein the second determining subunit is arranged for:

    determining a size of the target template in a subsequent-frame image according to $P_t = P_0 * \dfrac{d_t}{d_0}$,

    the $P_t$ being the size of the target template in the subsequent-frame image, the $P_0$ being the size of the target template in an initial-frame image, the $d_0$ being a first distance determined at an initial instant corresponding to the initial-frame image, the $d_t$ being the first distance determined at a subsequent instant corresponding to the subsequent-frame image, the subsequent-frame image and the initial-frame image being part of the image data, and the subsequent-frame image coming later in time than the initial-frame image.

13. The device according to claim 9, wherein the third determining unit comprises a fourth determining subunit and a fifth determining subunit,
    wherein the fourth determining subunit is arranged for: determining the third distance between the electronic equipment and the target according to $d = d_{uwb} \cdot \cos \theta_v$,
    the d being the third distance, the $d_{uwb}$ being the first distance, the $\theta_v$ being an angle of pitch of the camera,
    wherein the fifth determining subunit is arranged for: determining the third angle formed with the target by the direction in which the electronic equipment is advancing according to $\theta = \sigma \cdot \theta_{vision} + (1 - \sigma) \cdot \theta_{uwb}$,
    the $\theta$ being the third angle, the $\theta_{uwb}$ being the first angle, the $\theta_{vision}$ being the second angle, the $\sigma$ being a constant between 0 and 1 that determines weights of the $\theta_{vision}$ and the $\theta_{uwb}$.

14. The device according to claim 9, wherein the controlling unit comprises at least one of a first adjusting subunit, a second adjusting subunit, or a third adjusting subunit,
    wherein the first adjusting subunit is arranged for: advancing the electronic equipment toward the target by adjusting, according to the third angle, the direction in which the electronic equipment is advancing,
    wherein the second adjusting subunit is arranged for: directing the camera at the target by adjusting, according to the third angle, an angle of pitch of the camera,
wherein the third adjusting subunit is arranged for: adjusting, according to the third distance, a speed at which the electronic equipment is advancing.

15. A device for tracking a target, applying to electronic equipment, the device comprising:

a processor; and
memory having stored thereon instructions executable by the processor,
wherein when executed by the processor, the instructions cause the processor to perform the method according to any one of claims 1 to 7.

16. A non-transitory computer-readable storage medium having stored thereon executable instructions that, when executed by a processor, cause the processor to perform the method according to any one of claims 1 to 7.

first relative location information of a target to be tracked with respect to electronic equipment is determined using a carrier-free communication module — S101

second relative location information of the target with respect to the electronic equipment is determined using a camera — S102

third relative location information of the target with respect to the electronic equipment is determined according to the first relative location information and the second relative location information — S103

tracking of advance of the target by the electronic equipment is controlled according to the third relative location information — S104

**FIG. 1**

camera

UWB beacon

$\theta v$

$d_{uwb}$

joystick

$\theta uwb$

target to be tracked

UWB
communication
module

wheel

balanced car

**FIG. 2**

target to be tracked

UWB beacon

$\theta_{uwb}$

$\theta_{vision}$

UWB communication module

camera

balanced car

**FIG. 3**

UAV

UWB communication module

camera

$\theta$uwb

$\theta$v

$d_{uwb}$

UWB beacon

target to be tracked

**FIG. 4**

201 202 203 204

| first determining unit | second determining unit | Third determining unit | controlling unit |

**FIG. 5**

## INTERNATIONAL SEARCH REPORT

| International application No. |
| --- |
| PCT/CN2017/073119 |

**A. CLASSIFICATION OF SUBJECT MATTER**

G01C 1/04 (2006.01) i

According to International Patent Classification (IPC) or to both national classification and IPC

**B. FIELDS SEARCHED**

Minimum documentation searched (classification system followed by classification symbols)

G01C; H04W; H04Q; G06K; G06Q

Documentation searched other than minimum documentation to the extent that such documents are included in the fields searched

Electronic data base consulted during the international search (name of data base and, where practicable, search terms used)

WPI, EPODOC, CNKI, CNPAT: 跟踪, 定位, 位置, 距离, 角度, 无载波通信, 摄像, 图像, 可视, 视频, UWB, ultra wideband, track+, locat+, position+, distance, angle, image, video, visual, visible

**C. DOCUMENTS CONSIDERED TO BE RELEVANT**

| Category* | Citation of document, with indication, where appropriate, of the relevant passages | Relevant to claim No. |
| --- | --- | --- |
| X | CN 103139904 A (BEIJING AEROSPACE CHANGFENG SCIENCE AND TECHNOLOGY INDUSTRIES GROUP CO., LTD.) 05 June 2013 (05.06.2013), description, paragraphs [0016]-[0020] | 1-16 |
| X | CN 102546680 A (BEIJING AEROSPACE CHANGFENG SCIENCE AND TECHNOLOGY INDUSTRIES GROUP CO., LTD.) 04 July 2012 (04.07.2012), description, paragraphs [0017]-[0021] | 1-16 |
| X | CN 103884332 A (LENOVO (BEIJING) CO., LTD.) 25 June 2014 (25.06.2014), claim 1 | 1, 8, 15, 16 |
| X | CN 104754515 A (BEIJING YUNJI TECHONOLOGY CO., LTD.) 01 July 2015 (01.07.2015), description, paragraphs [0006]-[0012] | 1, 8, 15, 16 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 June 2017 | 11 July 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer HUANG, Yi Telephone No. (86-10) 62413418 |
| --- | --- |

Form PCT/ISA/210 (second sheet) (July 2009)

**INTERNATIONAL SEARCH REPORT**

| International application No. |
|---|
| PCT/CN2017/073119 |

C (Continuation).     DOCUMENTS CONSIDERED TO BE RELEVANT

| Category* | Citation of document, with indication, where appropriate, of the relevant passages | Relevant to claim No. |
|---|---|---|
| A | CN 105157681 A (NORTHWESTERN POLYTECHNICAL UNIVERSITY) 16 December 2015 (16.12.2015), entire document | 1-16 |
| A | CN 104777847 A (CENTRAL SOUTH UNIVERSITY) 15 July 2015 (15.07.2015), entire document | 1-16 |

Form PCT/ISA /210 (continuation of second sheet ) (July 2009)

## INTERNATIONAL SEARCH REPORT
Information on patent family members

| | International application No. |
|---|---|
| | PCT/CN2017/073119 |

| Patent Documents referred in the Report | Publication Date | Patent Family | Publication Date |
|---|---|---|---|
| CN 103139904 A | 05 June 2013 | None | |
| CN 102546680 A | 04 July 2012 | None | |
| CN 103884332 A | 25 June 2014 | None | |
| CN 104754515 A | 01 July 2015 | None | |
| CN 105157681 A | 16 December 2015 | None | |
| CN 104777847 A | 15 July 2015 | None | |

Form PCT/ISA /210 (patent family annex) (July 2009)